# EUROPEAN PATENT APPLICATION

(11) **EP 0 630 006 A1**
(43) Date of publication of application: **21.12.1994**
(21) Application number: 94304318.2
(22) Date of filing: 15.06.1994
(51) Int. Cl.: G11B 7/14, G11B 20/10, G11B 21/00

(54) **Disc data recording and/or reproducing apparatus**

(30) Priority: 15.06.1993 JP 142428/93
(71) Applicant: KABUSHIKI KAISHA TOSHIBA, Kawasaki-shi, Kanagawa-ken 210 (JP)
(72) Inventor: Miyano, Yuichi, c/o Intellectual Property Division, Minato-ku, Tokyo (JP)
(74) Representative: Muir, Ian R.

(57) **Abstract**

A disc data recording and/or reproducing apparatus for recording and/or reproducing data to or from a pair of separated data tracks on a disc is provided. The apparatus includes a pair of recording and/or reproducing heads (4, 5) for recording or reproducing data in cooperation with each other to or from the pair of separated data tracks of the disc (2), a head travel controller (6, 7) for controlling the pair of recording and/or reproducing heads to travel oppositely with each other in the radial direction of the disc (2), and a data rate controller (6, 7) for dividing or integrating data written or read by the pair of recording and/or reproducing heads (4, 5).

## Description

The present invention relates to a disc data recording and/or reproducing disc apparatus, and more particularly to a double-head type disc data reproducing and/or reproducing apparatus.

A constant angular velocity system (hereinafter referred to as a CAV system) recording format has been currently adopted for general hard disc apparatus or magneto-optic disc apparatus. The CAV system has the merit that access time is fast since the data rate when writing and reading operations of the disc is easy since the disc rotation speed is constant. However, there are problems with respect to recording capacity as the recording density is very different between the inner and outer portions of the disc.

Conventionally, a constant linear velocity system (hereinafter referred to as a CLV system) which has been adopted for music compact disc, etc. has the merit of increased recording capacity since the recording density is constant over the entire disc surface. However, it has the problem that the disc rotation speed has to be changed according to the track position which is traced by the magnetic head or light beam and if the travelling distance of the magnetic head or light beam increases for search, etc., the seek-time for the rotation speed has a time lag and access time increases.

So, as a means of accommodating the merits of the two recording formats described above, there is the known modified CAV system (hereinafter referred to as an M-CAV system). In this M-CAV system, the recording capacity is secured by making the recording density uniform by changing the amount of data to be recorded on each recording track while keeping the disc rotation speed constant. This system has the feature that the further the track tracing position of the magnetic head or light beam travels from the inner portion of the outer portion of the disc the more the data rate increases.

In this system, however, if a higher speed of data writing or reading is demanded, the performance of such analog circuits as RF circuitry must be adapted to the data rate of the outer portion of the disc. However, in the case where it is inconvenient if a time lag is inadvantageously large at the time when reading or writing image data and/or audio data, it has to be adapted to a data rate of the inner portion of a disc, and therefore there were some uselessness in the design of the analog circuitry. In addition, there is the problem that the balance in circuit configuration becomes worse because of the large difference in data rates between the inner and outer tracks of the disc.

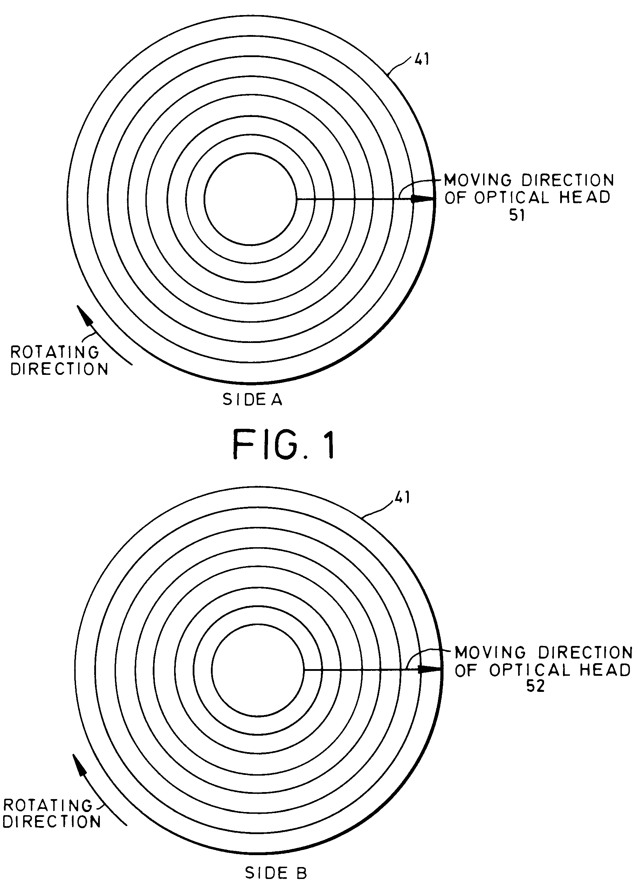

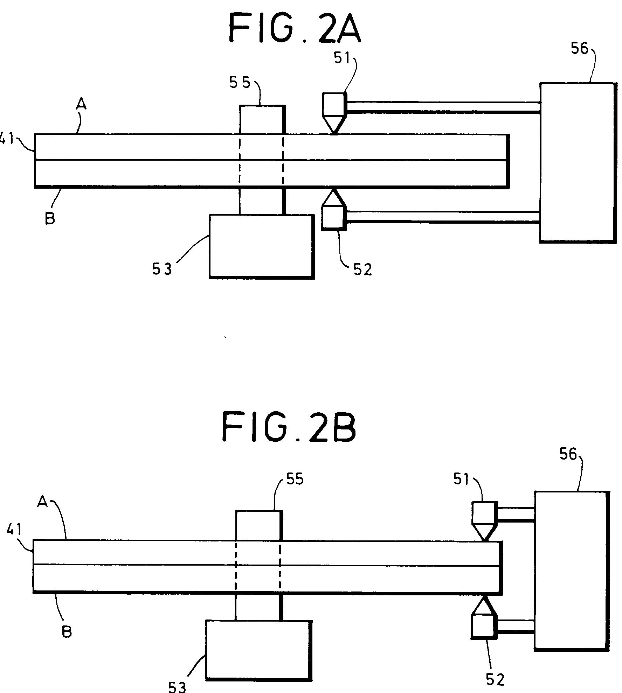

Referring now to Figures 1 to 3, an example of a system known to the applicant will be briefly described. As shown in Figure 1, the exemplary known system is adapted for reading or writing data from or to a disc 41 which is configured as a double-sided disc having two data carrying surfaces A and B, as illustrated in Figure 1, in order to double recording capacity. This known system comprises magnetic or optical heads 51 and 52 one for each side of the disc 41; a motor 53, to rotate and control the disc 41 with a shaft 55 transmitting the rotating force of the motor 53 to the disc 41; and a head travel controlling apparatus 56 to control the travels of the magnetic or optical heads 51 and 52, as illustrated in Figures 2A and 2B. The magnetic or optical heads 51 and 52 travel together from the inner portion to the outer portion of the disc 41 and vice versa.

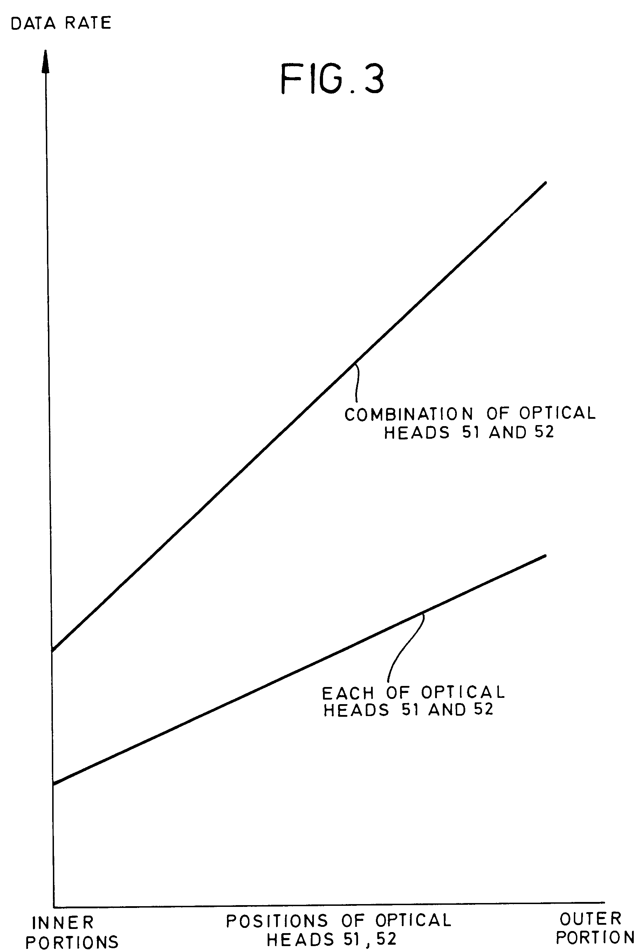

However, in this known system the data rates of the magnetic or optical heads 51 and 52 increase together, as illustrated in Figure 3, as they travel from the inner portion to the outer portion of such a disc. Accordingly this system has the problem, that the data rate resulting from combining the data rates of the magnetic or optical heads 51 and 52 varies greatly between the inner portion and the outer portion of the disc.

As described above, this known double-head type disc data recording and/or reproducing apparatus has the defect that the data rate, in reading or writing of data, varies between the inner portion and the outer portion of the disc.

The present invention seeks to provide a data recording and/or reproducing apparatus which is capable of minimising this defect of the known system as described above.

The present invention also seeks to provide a double-head type disc data recording and/or reproducing apparatus which is capable of making a data rate in reading or writing data constant or uniform at any position on the disc.

The present invention further seeks to provide a double-head type disc data recording and/or reproducing apparatus which is capable of obtaining a high recording density.

In order to achieve the object as described above. the disc data recording and/or reproducing apparatus of the present invention for recording and/or reproducing data to or from a pair of separated data tracks on a disc includes a pair of recording and/or reproducing heads for recording or reproducing data in cooperation with each other to or from the pair of separated data tracks of the disc, a head travel controller for controlling the pair of recording and/or reproducing heads to travel with respect to each other in the radial direction of the disc. and a data rate controller for dividing or integrating data written or read by the pair of recording and/or reproducing heads.

On the disc data recording and/or reproducing apparatus in the construction as described above, a substantially constant combined data rate may be obtained over the entire data area of the disc.

Additional features and advantages of th present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a schematic diagram showing the data beating surfaces of a known disc;
FIGURES 2A and 2B are schematic diagrams showing two states of data recording and/or reproducing for the known disc;
FIGURE 3 is a graph showing data rate characteristics in reading or writing data from or to the known disc;
FIGURES 4A and 4B are schematic diagrams showing two states of data recording and/or reproducing in the preferred embodiment of the present invention;
FIGURE 5 is a schematic diagram showing the data bearing surfaces of the disc in the embodiment of FIGURES 4A and 4B; and
FIGURE 6 is a graph showing data rate characteristics in reading or writing data from or to the disc in the embodiment of FIGURES 4A and 4B.

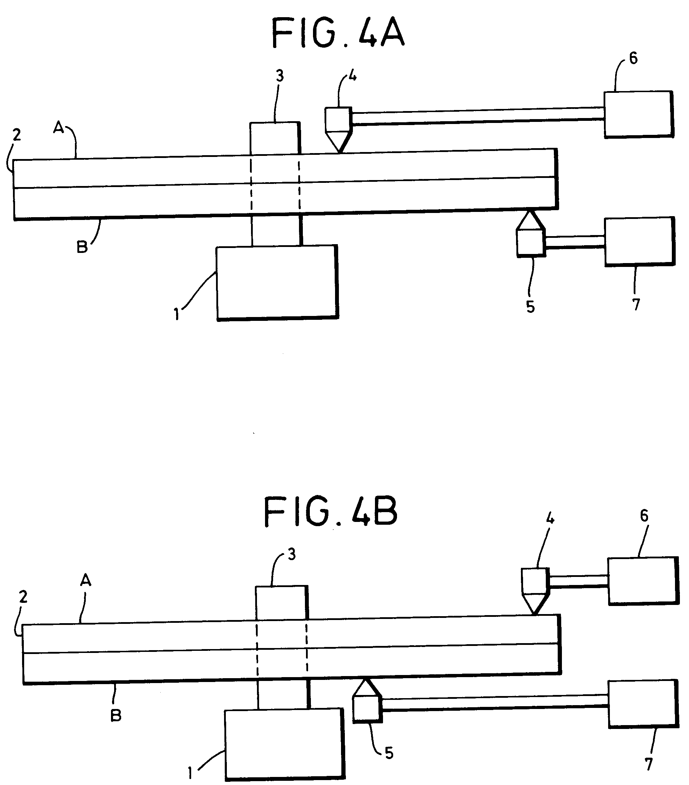

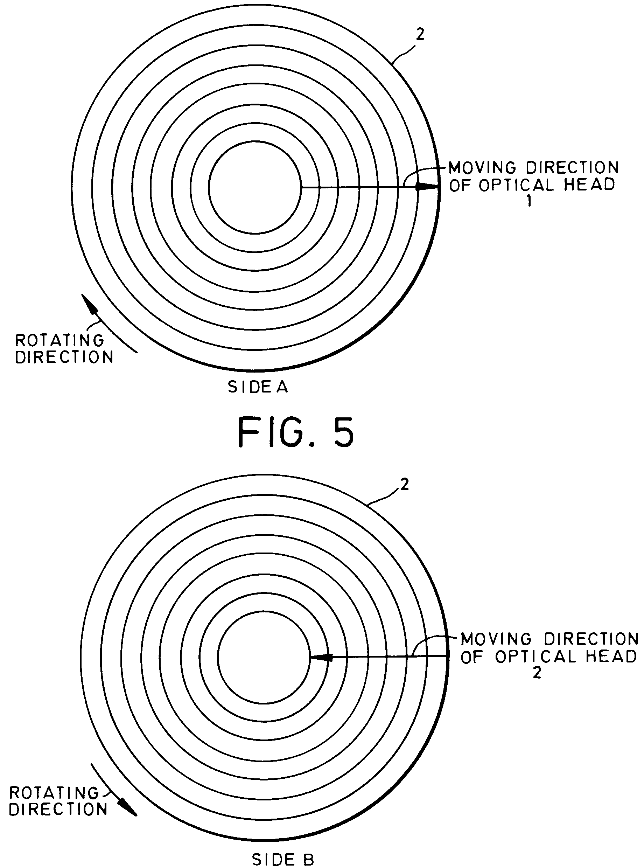

The present invention will be described in detail with reference to FIGURES 4A, 4B, 5 and 6.

FIGURES 4A and 4B are schematic diagrams showing two states of the disc data recording and/or reproducing apparatus in the preferred embodiment of the present invention. In FIGURES 4A and 4B, numeral 1 denotes a motor which supplies rotational power to a disc 2 and also controls the rotations of the disc 2. Numeral 3 denotes a rotary shaft which supports the disc 2 at its center of rotation and transmits the rotational power of the motor 1 to the disc 2. Numeral 4 denotes an optical head which is arranged at an inner portion of the surface A of the disc 2 at the start of recording (i.e., writing) or reproducing (i.e., reading) data using a light beam to or from the disc 2. The optical head 4 moves radially toward the outer portion of the disc 2 in the recording or reproducing operation (Fig. 4A). Numeral 5 denotes another optical head which is arranged at an outer portion of the surface B of the disc 2 at the start of recording or reproducing data using a light beam to or from the disc 2. The optical head 5 moves radially toward the inner portion of the disc 2 in the recording or reproducing operation (Fig. 4A). Numeral 6 is a head travelling control circuit for controlling the movement of the optical head 4 during the data recording or reproduction operation. Numeral 7 also denotes a head travelling control circuit for controlling the movement of the optical head 5 during the data recording and/or reproduction operation.

The optical heads 4 and 5 cooperate with each other to record data which are input from an outside source as a bit string, on the disc 2 using a light beam, as well as to reproduce a bit string recorded on the disc 2 as data by tracing the bit train using a light beam.

The disc 2 is made in the form of a double-sided disc configuration comprising both A and B data bearing surfaces of which track running directions and rotational directions in data reading or writing are opposite to each other.

Referring now to FIGURES 4A and 4B, operations in the data writing or reading will be explained in detail. Data input from the outside is appropriately divided and input to the optical heads 4 and 5. At the time of starting the recording. the optical head 4 is set at the inner portion of the disc 2 while the optical head 5 is set at the outer portion of the disc 2, as illustrated in FIGURE 4A. When the recording starts, the optical head 4 travels in the radial direction of the disc 2 toward the outer portion of the disc 2 while the optical head 5 travels toward the inner portion of the disc 2. At this time, the travels of the optical heads 4 and 5 are so controlled by the head travelling control circuits 6 and 7 that the number of tracks passed by the optical heads 4 and 5 from their initial positions always agree with each other. FIGURE 4B shows the states of the optical heads 4 and 5 when the recording has been terminated.

Next, the operations in reading data will be explained. Data recorded on both the surfaces A and B of the disc 2 are reproduced by the optical heads 4 and 5. respectively. For instance, when the optical head 4 reads data by tracing the 10th track from the innermost track of the surface A of the disc 2, the optical head 5 reads data by tracing the 10th track from the outermost track of the surface B of the disc 2 Both data read by the optical heads 4 and 5 are combined together and output as integrated reproduced data.

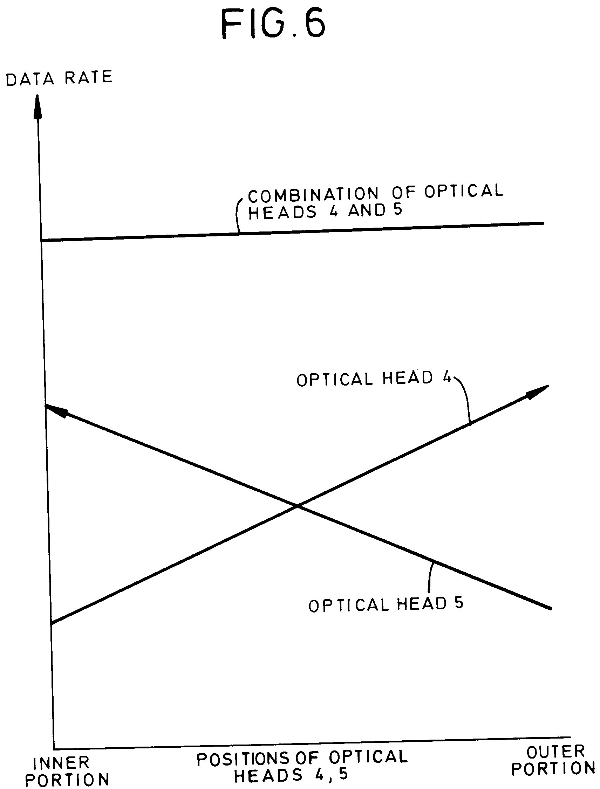

FIGURE 6 is an explanatory diagram showing data rate characteristics in recording or reproducing data by the optical heads 4 and 5 in the embodiment shown in FIGURES 4A and 4B. In FIGURE 6, the data rate associated with the optical head 4 increases by degrees as the head 4 travels from the inner portion toward the outer portion of the disc 2. Further. the data rate associated with the optical head 5 decreases by degrees as the head 5 travels from the outer portion toward the inner portion of the disc 2. Thus the combined data rate in recording or reproducing data by the optical heads 4 and 5 is always kepts to a substantially constant value over the inner portion to the outer portion of the disc 2.

In this embodiment, it is possible to realize a double-head type disc data recording and/or reproducing apparatus which is capable of maintaining the data rate of recording or reproducing data at an effectively constant level by using the double-sided disc 2 having two data bearing surfaces of which both track running directions as well as both rotational directions in reading or writing data are opposite with respect to each other, and also by reading or writing data from or to the surface A from the inner portion to the outer portion by means of the optical head 4 and simultaneously reading or writing data from or to the surface B from the outer portion to the inner portion by means of the optical head 5.

As described above. the present invention can provide an extremely preferable disc data recording and or reproducing apparatus.

While there have been illustrated and described what are at present considered to be preferred embodiments of the present invention, it will be understood by those skilled in the art that various changes and modifications may be made. and equivalents may be substituted for elements thereof without departing from the true scope of the present invention. In addition. many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example, for the purposes of a divisional application.

## Claims

1. A disc data recording and/or reproducing apparatus for recording and/or reproducing data to or from a pair of separated data tracks on a disc (2), comprising:
a pair of recording and/or reproducing heads (4. 5) for recording or reproducing data in cooperation with each other to or from the pair of separated data tracks of the disc (2);
head travel controlling means (6, 7) for controlling the pair of recording and/or reproducing heads (4, 5) to travel in opposite directions with respect to each other in the radial direction of the disc (2); and
data rate controlling means (6, 7) for dividing or integrating data respectively to be written by or read by the pair of recording and/or reproducing heads (4, 5).

2. A disc data recording and/or reproducing apparatus as claimed in claim 1, wherein the disc (2) is a double-sided type disc having two sides (A, B) each having data track oriented oppositely with respect to the other.

3. A disc data recording and/or reproducing apparatus as claimed in claim 2. wherein the pair of recording and/or reproducing heads (4, 5) separately face the different side (A, B) of the disc (2).
